# FASCICULE DE BREVET EUROPEEN

(11) **EP 4 314 888 B1**
(45) Date de publication et mention de la délivrance du brevet: **08.05.2024**
(21) Numéro de dépôt: 23707134.5
(22) Date de dépôt: 03.02.2023
(51) Int. Cl.: G01S 7/481, G02B 17/06, G02B 17/08, G02B 27/00, G02B 23/02

(54) **TÉLÉSCOPE À FAIBLE RÉÉMISSION EN DIRECTION DU PLAN FOCAL ET APPAREIL OPTIQUE D'ÉMISSION-RÉCEPTION COMPRENANT UN TEL TÉLÉSCOPE/**
TELESKOP MIT GERINGER REEMISSION ZUR FOKALEBENE UND OPTISCHE SENDE-EMPFANGSVORRICHTUNG MIT EINEM SOLCHEN TELESKOP
TELESCOPE WITH LOW RE-EMISSION TOWARDS THE FOCAL PLANE AND OPTICAL EMITTING-RECEIVING DEVICE COMPRISING SUCH A TELESCOPE

(30) Priorité: 07.04.2022 FR 2203176
(43) Date de publication de la demande: 07.02.2024
(73) Titulaire: Airbus Defence and Space SAS, 31402 Toulouse Cedex 4 (FR)
(72) Inventeur: BARBET, Adrien, 31402 TOULOUSE CEDEX 4 (FR); BERCEAU, Paul, 31402 TOULOUSE CEDEX 4 (FR)
(74) Mandataire: Plasseraud IP
(86) Numéro de dépôt international: PCT/FR2023/050150
(87) Numéro de publication internationale: WO 2023/194667

(56) Documents cités:
- CN-A- 111 610 511
- ZHAO DONGGE ET AL: "Optimization design and performance test of optical antenna for laser communication", PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10840, 24 janvier 2019 (2019-01-24), pages 1084017-1084017, XP060114892, DOI: 10.1117/12.2506592 ISBN: 978-1-5106-2099-5

## Description

### Domaine technique

La présente description concerne un télescope à faible réémission de rayonnement en direction de son plan focal. Elle concerne aussi un appareil optique d'émission-réception qui comprend un tel télescope.

### Technique antérieure

Les télescopes axiaux, c'est-à-dire dont les surfaces réfléchissantes ont des axes optiques respectifs qui sont superposés à l'axe optique du télescope, présentent l'avantage d'être plus compacts et moins chers à fabriquer que les télescopes à configuration hors d'axe.

Mais lorsqu'une source de rayons lumineux d'émission est disposée dans le plan focal d'un télescope axial, l'un au moins des miroirs du télescope réfléchit en direction du plan focal une partie des rayons lumineux d'émission qui sont proches de l'axe optique. Alors, un photodétecteur qui est aussi disposé dans le plan focal détecte involontairement cette partie réfléchie des rayons lumineux d'émission, en produisant un signal qui est appelé signal Narcisse dans le jargon de l'Homme du métier. Or parce que l'intensité des rayons lumineux d'émission est très supérieure à celle de rayons lumineux de réception utiles qui entrent dans le télescope en provenance de l'extérieur, le signal Narcisse réduit la sensibilité de détection de ces derniers, ou bien les masque lorsqu'ils sont simultanés. Par exemple, lorsque le télescope est utilisé dans un terminal de communication par signaux laser et qu'il est commun aux voies d'émission et de réception de ce terminal, les signaux optiques d'émission peuvent avoir une puissance de quelques watts, alors que les signaux optiques de réception peuvent avoir une puissance de quelques nanowatts, voire quelques picowatts. Un transfert involontaire d'une fraction de l'intensité des signaux optiques de la voie d'émission vers la voie de réception, due à une rétro-réflexion d'une partie des signaux optiques d'émission sur l'un des miroirs du télescope, peut alors empêcher de détecter les signaux optiques de réception, voire provoquer une saturation d'un photodétecteur de réception. Des télescopes conventionnels de l'état de l'art sont divulgués dans CN 111 610 511 ainsi que dans la publication intitulée "Optimization design and performance test of optical antenna for laser communication",PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10840, 24 janvier 2019, pages 1084017-1084017.

### Problème technique

A partir de cette situation, un but de la présente invention est de proposer un nouveau télescope axial, pour lequel le signal Narcisse est au moins en partie réduit ou supprimé.

### Résumé de l'invention

Pour atteindre ce but ou un autre, un premier aspect de l'invention propose un télescope tel que défini dans la revendication 1, qui comprend au moins un miroir primaire et un miroir secondaire, et qui est adapté pour former, lors d'une utilisation de ce télescope, une image dans un plan focal avec des rayons lumineux de réception qui sont réfléchis par le miroir primaire puis par le miroir secondaire en direction du plan focal. Dans ce télescope, le miroir secondaire est orienté perpendiculairement à l'axe optique du télescope.

Le miroir primaire est pourvu d'un premier trou au niveau d'une intersection de sa surface réfléchissante avec l'axe optique, de sorte que les rayons lumineux de réception qui forment l'image dans le plan focal passent par le premier trou à travers le miroir primaire après avoir été réfléchis par le miroir secondaire.

Selon l'invention, le miroir secondaire est pourvu d'une altération de surface au niveau d'une intersection de la surface réfléchissante de ce miroir secondaire avec l'axe optique, cette altération de surface étant adaptée pour que des rayons lumineux qui proviennent du plan focal du télescope et qui parviennent à l'altération de surface du miroir secondaire en passant par le premier trou à travers le miroir primaire, soient empêchés au moins en partie d'être réfléchis par le miroir secondaire en direction du plan focal. Autrement dit, l'altération de surface du miroir secondaire réduit ou supprime le signal Narcisse qui résulterait d'une rétro-réflexion, rétrodiffusion ou réémission de certains des rayons lumineux d'émission sur le miroir secondaire.

L'invention est particulièrement bénéfique lorsque le télescope est d'un type axial, notamment lorsqu'il est du type Cassegrain. Toutefois, l'invention n'est pas limitée à des télescopes axiaux.

L'altération de surface de la surface réfléchissante du miroir secondaire, telle que proposée par la présente invention, peut être de différentes natures. Ce peut être une rugosité qui est accrue localement dans la surface réfléchissante du miroir secondaire, ou une peinture absorbante qui est appliquée localement sur cette surface réfléchissante, ou encore un ré-usinage local de la surface réfléchissante du miroir secondaire, par exemple en forme de méplat local, ou un élément qui est collé sur sa surface réfléchissante pour en changer la forme localement. Mais de préférence, l'altération de surface du miroir secondaire peut être un second trou qui relie la surface réfléchissante de ce miroir secondaire à son côté arrière. En effet, un tel trou est particulièrement efficace pour réduire ou supprimer une contribution du miroir secondaire au signal Narcisse.

Un tel second trou à travers le miroir secondaire, au niveau de l'intersection de sa surface réfléchissante avec l'axe optique du télescope, peut être combiné avec la disposition d'un piège optique, aussi appelé piège à lumière, derrière le miroir secondaire. Un tel piège à lumière sert non seulement à supprimer le signal Narcisse qui serait généré sinon par le miroir secondaire, mais il peut aussi éviter que de la lumière non-désirée et/ou parasite provenant de l'extérieur passe par le second trou à travers le miroir secondaire, puis par le premier trou à travers le miroir primaire, parvienne ensuite dans le plan focal et soit détectée. Dans un application spatiale, une telle lumière parasite pourrait être notamment de la lumière solaire.

De préférence, le piège optique qui est disposé derrière le miroir secondaire peut être pourvu de l'une au moins des caractéristiques additionnelles suivantes, pour présenter une grande efficacité à réduire encore plus le signal Narcisse :
- le télescope peut comprendre en outre une portion de surface qui est inclinée par rapport à l'axe optique, et qui est disposée derrière le miroir secondaire, de sorte qu'une partie au moins des rayons lumineux qui proviennent du plan focal du télescope et qui parviennent à l'altération de surface du miroir secondaire soient incidents sur la portion de surface inclinée après avoir traversé le miroir secondaire par le second trou. Cette portion de surface inclinée peut être au moins partiellement réfléchissante pour les rayons lumineux qui traversent le miroir secondaire par le second trou ;
- le télescope peut comprendre en outre une structure qui est absorbante pour du rayonnement, et disposée pour que la partie des rayons lumineux qui proviennent du plan focal du télescope et qui parviennent à l'altération de surface du miroir secondaire soit réfléchie au moins partiellement par la portion de surface inclinée en direction de la structure absorbante ;
- la portion de surface inclinée peut posséder une forme de cône saillant ou de pyramide, avec un sommet du cône qui est orienté vers le second trou. Dans ce cas, la structure absorbante peut entourer latéralement le cône ;
- le télescope peut comprendre en outre un tube qui est disposé derrière le miroir secondaire, parallèlement à l'axe optique et de sorte qu'une ouverture d'entrée du tube soit en vis-à-vis du second trou à travers le miroir secondaire ; et
- la portion de surface inclinée peut être en vis-à-vis d'une ouverture de sortie du tube sur un côté de ce tube qui est opposé au miroir secondaire, avec une distance de séparation entre la portion de surface inclinée et le tube telle que des rayons lumineux qui proviennent du plan focal du télescope et qui parviennent à l'altération de surface du miroir secondaire, et qui sont ensuite incidents sur la portion de surface inclinée en passant dans le tube, soient réfléchis par cette portion de surface inclinée et s'éloignent de l'axe optique en passant entre la portion de surface inclinée et le tube.

Le télescope selon l'invention comprend en outre au moins une lentille disposée sur un chemin des rayons lumineux de réception qui forment l'image dans le plan focal, en aval du miroir secondaire selon un sens de propagation de ces rayons lumineux de réception. Cette lentille possède deux surfaces optiques qui coupent l'axe optique du télescope, chacune des deux surfaces optiques de la lentille formant avec l'axe optique un angle qui est différent de 90° (degré) à un point d'intersection de la surface optique considérée de la lentille avec l'axe optique. En particulier, une direction respective normale à chaque surface optique de la lentille peut former avec l'axe optique un angle qui est compris entre 5° et 10°. De cette façon, une contribution de la lentille au signal Narcisse total du télescope peut être réduite ou supprimée.

Le télescope peut comprendre un système dioptrique formant collimateur ou relais imageur, ce système dioptrique comprenant plusieurs lentilles disposées sur le chemin des rayons lumineux de réception qui forment l'image dans le plan focal, chaque lentille ayant deux surfaces optiques qui coupent l'axe optique du télescope. Dans ce cas et de la même façon que précédemment, une direction respective normale à chacune des deux surfaces optiques de chaque lentille du système dioptrique peut former avec l'axe optique un angle qui est compris entre 5° et 10° à un point d'intersection de la surface optique de lentille considérée avec l'axe optique. Ainsi, des contributions de l'ensemble du système dioptrique au signal Narcisse total du télescope peuvent être réduites ou supprimées.

Encore de façon générale pour l'invention, le télescope peut comprendre en outre au moins un filtre spectral disposé sur le chemin des rayons lumineux de réception qui forment l'image dans le plan focal, en aval du miroir secondaire selon le sens de propagation de ces rayons lumineux de réception. Un tel filtre possède deux surfaces optiques qui coupent l'axe optique du télescope. Alors, chacune des deux surfaces optiques du filtre peut avantageusement former avec l'axe optique un angle qui est différent de 90° à un point d'intersection de cette surface optique du filtre avec l'axe optique. De préférence, une direction respective normale à chaque surface optique du filtre peut former avec l'axe optique un angle qui est compris entre 5° et 10°. De cette façon, une contribution du filtre au signal Narcisse total du télescope peut aussi être réduite ou supprimée.

Lorsque le télescope comprend un tel filtre, les deux surfaces optique de ce filtre peuvent avantageusement ne pas être parallèles l'une à l'autre. En particulier, un angle entre les deux surfaces optiques du filtre peut être compris entre 0,5° et 2°. La contribution du filtre au signal Narcisse total du télescope peut ainsi être réduite ou supprimée dans une mesure supplémentaire.

Encore de façon générale pour l'invention, le télescope peut comprendre en outre un masque de champ qui est situé dans un plan d'image intermédiaire du télescope. Ce masque de champ est opaque en dehors d'une fenêtre qui est destinée à être traversée par les rayons lumineux de réception qui forment l'image dans le plan focal. Un tel masque de champ contribue aussi à réduire le signal Narcisse total qui est détecté dans le plan focal du télescope.

Le télescope de l'invention peut être du type Cassegrain. Il peut ainsi être particulièrement compact et peu onéreux à fabriquer. Un intérêt tout particulier pour ce type de télescope réside dans son potentiel d'adaptation à des applications diverses, contrairement à des types de télescopes hors-d'axe tels que les anastigmats à trois miroirs, ou TMA pour «Tri-Mirror Anastigmat» en anglais.

Un second aspect de l'invention propose un appareil optique d'émission-réception tel que défini dans la revendication 14, et qui comprend un télescope, ce télescope étant conforme au premier aspect de l'invention, et qui comprend en outre :
- au moins un photodétecteur qui est agencé pour détecter une partie au moins des rayons lumineux de réception tels que parvenant au plan focal ; et
- au moins une source de rayons lumineux d'émission, qui est agencée pour émettre des rayons lumineux d'émission à partir d'au moins un point du plan focal, de sorte que ces rayons lumineux d'émission traversent le miroir primaire par le premier trou, soient réfléchis par le miroir secondaire puis par le miroir primaire.

Grâce au télescope de l'invention muni de l'altération de surface du miroir secondaire, le signal Narcisse qui serait généré par la source des rayons lumineux d'émission et détecté par le photodétecteur est évité. De cette façon la sensibilité et la dynamique du photodétecteur pour détecter les rayons lumineux de réception est préservée au moins dans une large mesure.

Un appareil optique d'émission-réception qui est conforme à l'invention peut former en particulier une partie d'un terminal de communication par signaux laser ou une partie d'un système LIDAR.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est une vue en coupe dans un plan méridien, d'un appareil optique d'émission-réception qui est conforme à l'invention ;
[Fig. 2] est une vue en coupe, dans le plan méridien, d'un miroir secondaire et d'un piège optique tels que pouvant être utilisés dans l'appareil de [Fig. 1] ; et
[Fig. 3] est une vue en coupe, dans le plan méridien, d'un collimateur tel que pouvant être utilisé dans l'appareil de [Fig. 1].

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

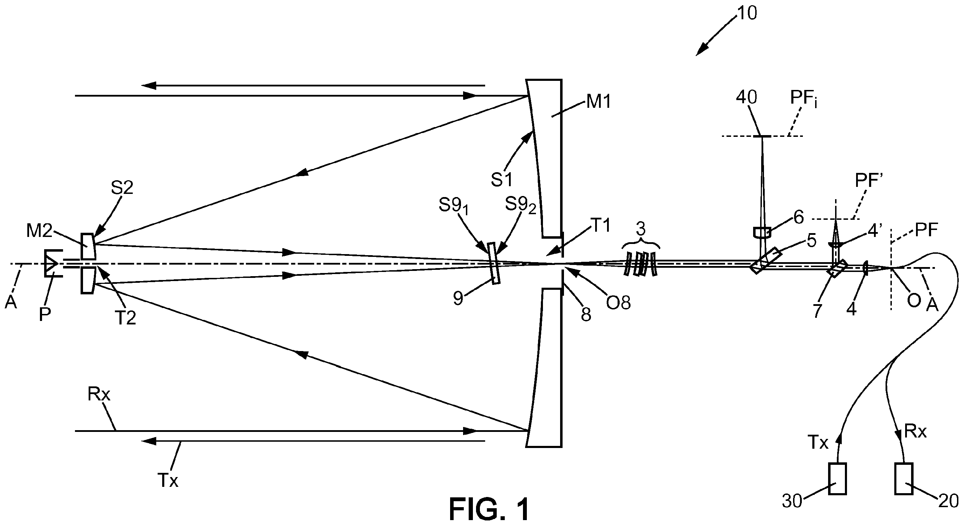

Dans [Fig. 1], la référence 10 désigne un télescope, par exemple de type Cassegrain, qui comprend un miroir primaire M1, un miroir secondaire M2, un collimateur 3 et une optique imageante 4. Le télescope 10 forme une image d'une scène qui est éloignée en avant du miroir primaire M1, dans un plan focal PF. Lorsque qu'une source lumineuse distante (non représentée) est située dans la scène, elle émet des rayons lumineux Rx qui sont d'abord réfléchis par le miroir primaire M1, puis par le miroir secondaire M2, qui traversent ensuite le collimateur 3 puis l'optique imageante 4, et convergent sur un point du plan focal PF. Ces rayons Rx ont été appelés rayons lumineux de réception dans la partie générale de la présente description. Le miroir primaire M1 est concave, le miroir secondaire M2 convexe, et S1 et S2 désignent leurs surfaces réfléchissantes respectives. De façon connue, le miroir primaire M1 est pourvu d'un trou de passage T1 dans une zone centrale de ce miroir, pour permettre le passage des rayons lumineux entre le miroir secondaire M2 et le plan focal PF. Ce trou de passage T1 a été appelé premier trou dans la partie générale de la présente description. Une réalisation préférée du collimateur 3 sera décrite en détail plus loin, et l'optique imageante 4 peut être constituée par une lentille convergente dont les faces optiques sont avantageusement pourvues de traitements antireflets efficaces pour la longueur d'onde des rayons lumineux de réception Rx.

Les miroirs primaire M1 et secondaire M2 peuvent avoir des surfaces réfléchissantes respectives qui sont symétriques autour d'un axe optique A-A du télescope 10. Le télescope 10 est alors dit axial.

Lorsque le télescope 10 est utilisé dans un terminal optique d'émission-réception, le plan focal PF peut constituer une interface entre le télescope 10 d'une part et d'autre part une section de génération de signaux optiques à transmettre ainsi qu'une section de détection de signaux optiques reçus. Les signaux optiques reçus correspondent aux rayons lumineux de réception Rx mentionnés plus haut, et les signaux optiques à transmettre correspondent à des rayons lumineux d'émission, désignés par Tx dans [Fig. 1]. Par exemple, la section de détection de signaux optiques reçus peut comprendre un photodétecteur 20 qui est couplé optiquement à un point O du plan focal PF, et la section de génération de signaux optiques à transmettre peut comprendre une source 30 des signaux optiques d'émission qui peut être couplée optiquement au même point O du plan focal PF. Ainsi, la direction d'émission et la direction de réception du terminal optique d'émission-réception sont identiques, et peuvent être orientées ensemble vers un terminal partenaire de communication par signaux laser si le terminal optique d'émission-réception qui est représenté est lui-même un terminal de communication par signaux laser. Le couplage optique du photodétecteur 20 et de la source 30 tous les deux au point O du plan focal PF peut être réalisé à base de fibres optiques, d'une façon qui est connue de l'Homme du métier. Par exemple, le point O peut être situé à l'intersection entre l'axe optique A-A du télescope 10 et le plan focal PF.

Dans le mode de réalisation qui est représenté, mais sans que cela soit nécessaire pour l'invention, un séparateur de faisceau 5, par exemple de type dichroïque, est disposé entre le collimateur 3 et l'optique imageante 4. Un tel séparateur 5 produit une duplication du plan focal PF à travers une autre optique imageante 6, créant ainsi un plan focal secondaire qui est désigné par PFᵢ. Par exemple, un capteur d'images 40 peut être disposé dans ce plan focal secondaire PFᵢ pour saisir en images la scène dans laquelle se trouve le terminal partenaire de communication par signaux laser. Il est encore possible de disposer en outre un autre séparateur de faisceau 7, par exemple entre le séparateur dichroïque 5 et l'optique imageante 4, pour produire encore une autre duplication du plan focal PF. Lorsque le séparateur 7 est un diviseur de faisceau par polarisation, le terminal de communication par signaux laser qui incorpore le télescope 10 peut fournir un multiplexage par polarisation. Alternativement à la configuration qui est représentée dans [Fig. 1], le plan focal PF peut être dédié à fonction d'émission de signaux optiques par le terminal vers l'extérieur, et le plan focal de duplication PF' qui est généré par le séparateur de faisceau 7 à travers une seconde optique imageante 4' peut être dédié séparément à la fonction de réception de signaux optiques en provenance de l'extérieur. Dans ce cas, la fibre optique qui relie la source 30 aboutit au plan focal PF, et celle qui relie le photodétecteur 20 aboutit au plan focal PF'. En particulier, les deux fibres optiques peuvent aboutir à des points respectifs des plans focaux PF et PF' qui sont conjugués l'un avec l'autre par le séparateur 7 à travers les optiques imageantes 4 et 4'. Dans la suite, la voie d'imagerie qui aboutit au capteur d'images 40 n'est plus évoquée, et la description est poursuivie en considérant que la voie de communication optique qui utilise le plan focal PF est bidirectionnelle, comme montré dans [Fig. 1].

Pour la structure de terminal de communication par signaux laser de [Fig. 1], et si la surface réfléchissante S2 du miroir secondaire M2 est continue jusqu'à l'axe optique A-A, alors le rayon lumineux d'émission qui est produit par la source 30 en étant superposé à l'axe optique A-A est rétroréfléchi par le miroir secondaire M2 et détecté par le photodétecteur 20. Ce signal lumineux de rétro-réflexion est désigné par signal Narcisse. Il est en général beaucoup plus intense que les signaux de réception qui proviennent du terminal partenaire de communication par signaux laser. En fait, le signal Narcisse empêche de détecter ces signaux de réception, ou réduit la sensibilité effective du photodétecteur 20 pour ces signaux de réception. Le signal Narcisse peut même endommager le photodétecteur 20 en l'exposant à une puissance lumineuse excessive. Le but de l'invention est alors de supprimer le signal Narcisse ou de le réduire dans une large mesure.

Selon l'invention, le miroir secondaire M2 est muni d'une altération de sa surface réfléchissante S2 dans une zone qui est centrée sur l'axe optique A-A. Cette altération supprime en grande partie le pouvoir rétroréfléchissant du miroir secondaire M2 au niveau de l'axe optique A-A, si bien que le signal Narcisse est très fortement réduit ou supprimé. Cette zone d'altération de la surface réfléchissante S2 peut être d'autant plus grande que le rayon de courbure du miroir secondaire M2 est grand. Le diamètre de cette zone d'altération peut être calculé simplement ou déterminé par simulation de rayons lumineux («ray tracing» en anglais). Par exemple, ce diamètre de la zone d'altération de la surface réfléchissante S2 du miroir secondaire M2 peut être sensiblement égal à 2,7 mm (millimètre) lorsque le rayon de courbure du miroir secondaire M2 est sensiblement égal à 100 mm, la distance entre ce miroir secondaire M2 et le miroir primaire M1, ou entre le miroir secondaire M2 et le masque de champ 8, est sensiblement égale à 350 mm, et le rayon du trou de passage T1 à travers le miroir primaire M1, ou celui de l'ouverture 08 du masque de champ 8, est sensiblement égal à 6 mm. Une évaluation plus précise par simulation de rayons lumineux en tenant compte du collimateur 3 donne une valeur d'environ 3 mm pour le diamètre de la zone d'altération de la surface réfléchissante S2 du miroir secondaire M2.

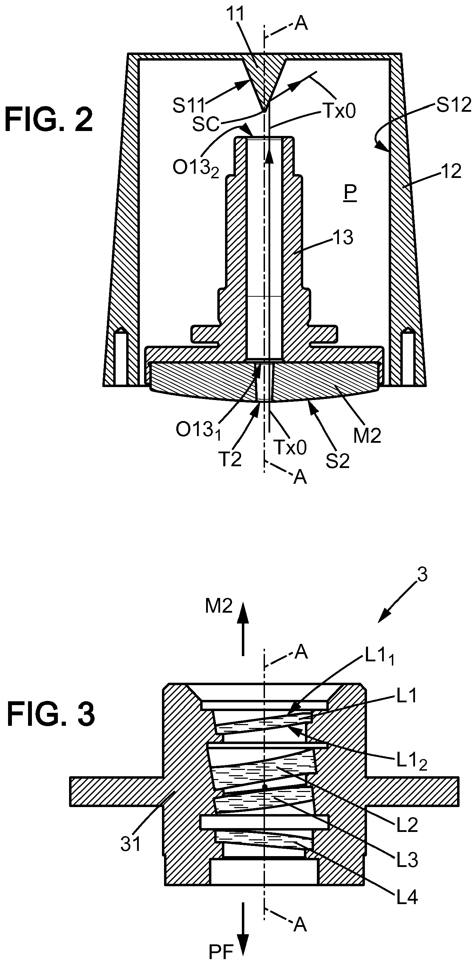

Une façon particulièrement efficace de supprimer le signal Narcisse est de réaliser l'altération de la surface réfléchissante S2 du miroir secondaire M2 sous forme d'un trou de passage à travers ce miroir secondaire, et de le combiner avec un piège à lumière qui est situé en arrière du miroir secondaire M2, en vis-à-vis du trou de passage. Dans [Fig. 1] et [Fig. 2], le trou de passage à travers le miroir secondaire M2 est désigné par T2, et le piège à lumière désigné par P. Le trou de passage T2 a été appelé second trou dans la partie générale de la présente description.

Conformément à [Fig. 2], le piège à lumière P peut comprendre un cône saillant 11 à surface réfléchissante, dont l'axe de symétrie de révolution est superposé à l'axe optique A-A du télescope 10. La pointe du cône 11, ou sommet désigné par la référence SC, est orientée vers le trou de passage T2, sur le côté arrière du miroir secondaire M2. Ainsi, un rayon lumineux Tx0 qui provient de la source 30 et qui traverse le miroir secondaire M2 par le trou de passage T2 se réfléchit sur la surface inclinée S11 du cône 11, et est ainsi dévié latéralement. De cette façon, le rayon lumineux Tx0 n'est pas rétroréfléchi en direction du plan focal PF, de sorte qu'il ne contribue pas à un signal Narcisse résiduel. Possiblement, le cône 11 peut être remplacé par un miroir plan qui est incliné par rapport à l'axe optique A-A, par exemple à 45° (degré).

Pour être encore plus efficace, le piège à lumière P peut être complété par l'un au moins des éléments additionnels suivants :
- une enveloppe périphérique, appelée structure absorbante 12, par exemple en forme de cylindre dont l'axe est aussi superposé à l'axe optique A-A, et dont la surface interne S12 est absorbante pour les rayons lumineux d'émission. Possiblement, cette surface interne S12 peut être pourvue d'une rugosité diffusante et/ou de motifs en relief pour augmenter son efficacité d'absorption lumineuse. Une telle surface interne S12 est destinée à absorber les rayons lumineux Tx0 après qu'ils ont été réfléchis, diffusés ou réémis par la surface S11 du cône 11 ; et
- un tube 13, dont l'axe est encore superposé à l'axe optique A-A du télescope 10, dont une ouverture d'entrée O13₁ est située dans le prolongement du trou de passage T2 à travers le miroir secondaire M2, et dont une ouverture de sortie O13₂ est située en face du cône 11. L'ouverture de sortie O13₂ du tube 13 est située à distance du cône 11 pour laisser passer entre celui-ci et le tube 13, en direction de la surface interne S12 de la structure absorbante 12, les rayons lumineux Tx0 après qu'ils ont été réfléchis par la surface S11 du cône 11.

La structure absorbante 12 et/ou le tube 13 peut (peuvent) être combiné(s) de façon judicieuse avec une monture du miroir secondaire M2 pour en réduire le poids total et l'encombrement.

Le télescope 10 forme une image intermédiaire de la scène entre le miroir secondaire M2 et le collimateur 3 (voir [Fig. 1]). Il est alors possible de disposer un masque de champ 8 au niveau de cette image intermédiaire, afin que seulement des rayons lumineux de réception Rx qui sont utiles pour la fonction de réception de communication et éventuellement aussi pour la voie d'imagerie soient transmis à travers l'ouverture 08 de ce masque de champ. Les autres rayons lumineux de réception sont bloqués par le pourtour opaque du masque de champ 8, et ne peuvent ainsi contribuer à une lumière parasite qui serait susceptible de parvenir au photodétecteur 20.

Il peut aussi être avantageux de disposer un filtre spectral 9 entre le miroir secondaire M2 et le collimateur 3, de préférence en étant décalé le long de l'axe optique A-A par rapport à l'image intermédiaire. Un tel filtre, lorsqu'il est du type filtre solaire et que la longueur d'onde du fonctionnement de réception du terminal de communication par signaux laser est autour de 1550 nm (nanomètre), peut réduire des échauffements locaux que pourraient provoquer des entrées de rayonnement solaire dans le télescope 10. Alors, pour réduire une contribution au signal Narcisse que pourraient provoquer des réflexions sur les surfaces optiques du filtre 9, ces surfaces optiques de filtre sont préférablement orientées pour ne pas être perpendiculaires à l'axe optique A-A. Typiquement, chaque surface optique S9₁, S9₂ du filtre 9 peut être orientée de sorte qu'une direction qui est perpendiculaire à cette surface de filtre forme un angle qui est compris entre 5° et 10° avec l'axe optique A-A. Une précaution supplémentaire peut consister à utiliser un filtre 9 dit en coin («wedged» en anglais), pour lequel les deux surfaces optiques de filtre S9₁ et S9₂ ne sont pas parallèles, par exemple en formant entre elles un angle qui peut être compris entre 0,5° et 2°.

[Fig. 3] montre une structure possible pour le collimateur 3. Il peut ainsi être constitué d'une série de quatre lentilles qui sont disposées successivement sur le trajet des rayons lumineux de réception Rx et de transmission Tx. Ces lentilles sont désignées dans l'ordre par les références L1, L2, L3 et L4, L1 étant du côté du miroir secondaire M2 et L4 étant du côté du plan focal PF. Avantageusement, ce quadruplet des lentilles L1-L4 peut être monté dans un barillet 31 qui permet d'intégrer le collimateur 3 comme un composant unique dans le télescope 10. L'assemblage complet du terminal optique d'émission-réception peut ainsi être simplifié. Les surfaces optiques des lentilles L1-L4 comportent avantageusement des revêtements antireflets qui sont efficaces pour le(s) longueur(s) d'onde de fonctionnement du terminal optique d'émission-réception, afin de réduire des contributions de ces surfaces optiques de lentilles au signal Narcisse. Alternativement ou en combinaison, pour réduire encore plus ces contributions du collimateur 3 au signal Narcisse, chacune des surfaces optiques des lentilles L1-L4 peut couper l'axe optique A-A avec un angle qui est différent de 90°. A titre d'illustration, dans [Fig. 3], L1₁ et L1₂ désignent les deux surfaces optiques de la lentille L1, qui sont obliques par rapport à l'axe optique A-A. Il en est de même pour toutes les surfaces optiques des autres lentilles L2-L4, avec des angles d'intersection avec l'axe optique A-A qui peuvent varier d'une surface optique à l'autre, mais en restant différent de 90°. Par exemple, la direction qui est perpendiculaire à chaque surface optique des lentilles du collimateur 3 peut faire un angle qui est compris entre 5° et 10° avec l'axe optique A-A à l'endroit d'intersection entre cette surface optique et cet axe. En imposant cet angle pour chaque surface optique du collimateur 3, l'Homme du métier sait déterminer la forme complète de toutes les surfaces optiques du collimateur 3, par exemple du type conique, pour produire la fonction de collimation en réduisant les aberrations optiques de l'ensemble du télescope 10. Des logiciels spécialisés sont disponibles pour cela.

Il est entendu que l'invention peut être reproduite en modifiant des aspects secondaires des modes de réalisation qui ont été décrits en détail ci-dessus, tout en conservant certains au moins des avantages cités. Notamment, certains des composants optiques mentionnés peuvent être remplacés par d'autres dont les fonctions sont au moins en partie équivalentes, et le télescope de l'invention peut être utilisé pour d'autres applications que celles qui ont été mentionnées. Enfin, toutes les valeurs numériques qui ont été citées ne l'ont été qu'à titre d'illustration, et peuvent être changées en fonction de l'application considérée.

## Revendications

1. Télescope (10) comprenant au moins un miroir primaire (M1) et un miroir secondaire (M2), et adapté pour former, lors d'une utilisation du télescope, une image dans un plan focal (PF) avec des rayons lumineux de réception (Rx) qui sont réfléchis par le miroir primaire puis par le miroir secondaire en direction du plan focal, ledit miroir secondaire étant orienté perpendiculairement à un axe optique (A-A) dudit télescope,
le miroir primaire (M1) étant pourvu d'un premier trou (T1) au niveau d'une intersection de la surface réfléchissante (S1) dudit miroir primaire avec l'axe optique (A-A), de sorte que les rayons lumineux de réception (Rx) qui forment l'image dans le plan focal (PF) passent par le premier trou à travers le miroir primaire après avoir été réfléchis par le miroir secondaire (M2), et
le miroir secondaire (M2) étant pourvu d'une altération de surface au niveau d'une intersection d'une surface réfléchissante (S2) dudit miroir secondaire avec l'axe optique (A-A), ladite altération de surface étant adaptée pour que des rayons lumineux (Tx0) qui proviennent du plan focal (PF) du télescope (10) et qui parviennent à l'altération de surface du miroir secondaire en passant par le premier trou (T1) à travers le miroir primaire (M1), soient empêchés au moins en partie d'être réfléchis par ledit miroir secondaire en direction dudit plan focal,
le télescope (10) étant caractérisé qu'il comprend en outre au moins une lentille disposée sur un chemin des rayons lumineux de réception (Rx) qui forment l'image dans le plan focal (PF), en aval du miroir secondaire (M2) selon un sens de propagation desdits rayons lumineux de réception, ladite lentille ayant deux surfaces optiques qui coupent l'axe optique (A-A) du télescope, chacune des deux surfaces optiques de la lentille formant avec l'axe optique un angle qui est différent de 90° à un point d'intersection de ladite surface optique de la lentille avec l'axe optique.

2. Télescope (10) selon la revendication 1, dans lequel l'altération de surface du miroir secondaire (M2) est un second trou (T2) qui relie la surface réfléchissante (S2) dudit miroir secondaire à un côté arrière dudit miroir secondaire.

3. Télescope (10) selon la revendication 2, comprenant en outre une portion de surface qui est inclinée par rapport à l'axe optique (A-A), et qui est disposée derrière le miroir secondaire (M2), de sorte qu'une partie au moins des rayons lumineux (Tx0) qui proviennent du plan focal (PF) du télescope (10) et qui parviennent à l'altération de surface dudit miroir secondaire soient incidents sur la portion de surface inclinée après avoir traversé le miroir secondaire par le second trou (T2).

4. Télescope (10) selon la revendication 3, comprenant en outre une structure (12) absorbante pour du rayonnement, disposée pour que la partie des rayons lumineux (Tx0) qui proviennent du plan focal (PF) du télescope (10) et qui parviennent à l'altération de surface du miroir secondaire (M2) soit réfléchie au moins partiellement par la portion de surface inclinée en direction de la structure absorbante.

5. Télescope (10) selon la revendication 3 ou 4, dans lequel la portion de surface inclinée possède une forme de cône (11) saillant ou de pyramide, avec un sommet (SC) dudit cône qui est orienté vers le second trou (T2), et la structure absorbante (12) entoure latéralement le cône.

6. Télescope (10) selon l'une quelconque des revendications 2 à 5, comprenant en outre un tube (13) qui est disposé derrière le miroir secondaire (M2), parallèlement à l'axe optique (A-A) et de sorte qu'une ouverture d'entrée (O13₁) du tube soit en vis-à-vis du second trou (T2) à travers le miroir secondaire.

7. Télescope (10) selon l'une quelconque des revendications 3 à 5 en combinaison avec la revendication 6, dans lequel la portion de surface inclinée est en vis-à-vis d'une ouverture de sortie (O13₂) du tube (13) sur un côté dudit tube qui est opposé au miroir secondaire (M2), avec une distance de séparation entre ladite portion de surface inclinée et ledit tube telle que des rayons lumineux (Tx0) qui proviennent du plan focal (PF) du télescope (10) et qui parviennent à l'altération de surface du miroir secondaire (M2), et qui sont ensuite incidents sur la portion de surface inclinée en passant dans le tube, soient réfléchis par ladite portion de surface inclinée et s'éloignent de l'axe optique en passant entre ladite portion de surface inclinée et ledit tube.

8. Télescope (10) selon l'une quelconque des revendications précédentes, dans lequel une direction respective normale à chaque surface optique de la lentille forme avec l'axe optique (A-A) un angle qui est compris entre 5° et 10°.

9. Télescope (10) selon l'une quelconque des revendications précédentes, comprenant un système dioptrique formant collimateur (3) ou relais imageur, ledit système dioptrique comprenant plusieurs lentilles (L1-L4) disposées sur le chemin des rayons lumineux de réception (Rx) qui forment l'image dans le plan focal (PF), chaque lentille ayant deux surfaces optiques qui coupent l'axe optique (A-A) du télescope, une direction respective normale à chacune des deux surfaces optiques de chaque lentille du système dioptrique formant avec l'axe optique un angle qui est compris entre 5° et 10° à un point d'intersection de ladite surface optique de lentille avec l'axe optique.

10. Télescope (10) selon l'une quelconque des revendications précédentes, comprenant en outre au moins un filtre spectral (9) disposé sur le chemin des rayons lumineux de réception (Rx) qui forment l'image dans le plan focal (PF), en aval du miroir secondaire (M2) selon le sens de propagation desdits rayons lumineux de réception, ledit filtre ayant deux surfaces optiques (S9₁, S9₂) qui coupent l'axe optique (A-A) du télescope, chacune des deux surfaces optiques du filtre formant avec l'axe optique un angle qui est différent de 90° à un point d'intersection entre ladite surface optique du filtre et l'axe optique.

11. Télescope (10) selon la revendication 10, dans lequel les deux surfaces optique (S9₁, S9₂) du filtre (9) ne sont pas parallèles l'une à l'autre.

12. Télescope (10) selon l'une quelconque des revendications précédentes, comprenant en outre un masque de champ (8) qui est situé dans un plan d'image intermédiaire du télescope, ledit masque de champ étant opaque en dehors d'une ouverture (08) de masque destinée à être traversée par les rayons lumineux de réception (Rx) qui forment l'image dans le plan focal (PF).

13. Télescope (10) selon l'une quelconque des revendications précédentes, ledit télescope étant d'un type axial, notamment d'un type Cassegrain.

14. Appareil optique d'émission-réception comprenant un télescope (10), ledit télescope étant selon l'une quelconque des revendications précédentes, et l'appareil optique comprenant en outre :
- au moins un photodétecteur (20) qui est agencé pour détecter une partie au moins des rayons lumineux de réception (Rx) tels que parvenant au plan focal (PF) ; et
- au moins une source (30) de rayons lumineux d'émission (Tx), qui est agencée pour émettre les rayons lumineux d'émission à partir d'au moins un point (O) du plan focal (PF), de sorte que lesdits rayons lumineux d'émission traversent le miroir primaire (M1) par le premier trou, soient réfléchis par le miroir secondaire (M2) puis par ledit miroir primaire (M1).

15. Appareil selon la revendication 14, formant une partie d'un terminal de communication par signaux laser ou une partie d'un système LIDAR.

## Patentansprüche

1. Teleskop (10), das mindestens einen Primärspiegel (M1) und einen Sekundärspiegel (M2) aufweist und angepasst ist, um bei einer Verwendung des Teleskops ein Bild in einer Fokalebene (PF) mit Empfangslichtstrahlen (Rx) zu erzeugen, die von dem Primärspiegel, dann von dem Sekundärspiegel in Richtung Fokalebene reflektiert worden sind, wobei der Sekundärspiegel senkrecht zu einer optischen Achse (A-A) des Teleskops orientiert ist,
wobei der Primärspiegel (M1) im Bereich eines Schnittpunkts der reflektierenden Oberfläche (S1) des Primärspiegels mit der optischen Achse (A-A) mit einem ersten Loch (T1) versehen ist, so dass die Empfangslichtstrahlen (Rx), die das Bild in der Fokalebene (PF) erzeugen, durch das erste Loch hindurch den Primärspiegel passieren, nachdem sie von dem Sekundärspiegel (M2) reflektiert worden sind, und
der Sekundärspiegel (M2) im Bereich eines Schnittpunkts einer reflektierenden Oberfläche (S2) des Sekundärspiegels mit der optischen Achse (A-A) mit einer Oberflächenvariation versehen ist, wobei die Oberflächenvariation angepasst ist, dass Lichtstrahlen (Tx0), die von der Fokalebene (PF) des Teleskops (10) herkommen und die zu der Oberflächenvariation des Sekundärspiegels gelangen, indem sie durch das erste Loch (T1) hindurch den Primärspiegel (M1) passieren, mindestens teilweise daran gehindert werden, von dem Sekundärspiegel in Richtung Fokalebene reflektiert zu werden,
wobei das Teleskop (10) **dadurch gekennzeichnet ist, dass** es ferner mindestens eine Linse aufweist, die auf einem Weg der Empfangslichtstrahlen (Rx), die das Bild in der Fokalebene (PF) erzeugen, nach dem Sekundärspiegel (M2) angeordnet ist, gesehen in einer Ausbreitungsrichtung der Empfangslichtstrahlen, wobei die Linse zwei optische Oberflächen hat, die die optische Achse (A-A) des Teleskops schneiden, wobei jede der zwei optischen Oberflächen der Linse einen Winkel mit der optischen Achse bildet, der an einem Schnittpunkt der optischen Oberfläche der Linse mit der optischen Achse verschieden von 90° ist.

2. Teleskop (10) nach Anspruch 1, in welchem die Oberflächenvariation des Sekundärspiegels (M2) ein zweites Loch (T2) ist, das die reflektierende Oberfläche (S2) des Sekundärspiegels mit einer Rückseite des Sekundärspiegels verbindet.

3. Teleskop (10) nach Anspruch 2, ferner aufweisend ein Oberflächengebiet, das bezüglich der optischen Achse (A-A) geneigt ist und das hinter dem Sekundärspiegel (M2) derart angeordnet ist, dass mindestens ein Teil der Lichtstrahlen (Tx0), die von der Fokalebene (PF) des Teleskops (10) herkommen und die zu der Oberflächenvariation des Sekundärspiegels gelangen, auf dem geneigten Oberflächengebiet auftreffen wird, nachdem er den Sekundärspiegel durch das zweite Loch (T2) hindurch passiert hat.

4. Teleskop (10) nach Anspruch 3, ferner aufweisend eine für Strahlung absorbierende Struktur (12), die derart angeordnet ist, dass der Teil der Lichtstrahlen (Tx0), die von der Fokalebene (PF) des Teleskops (10) herkommen und die zu der Oberflächenvariation des Sekundärspiegels gelangen, mindestens teilweise von dem geneigten Oberflächengebiet in Richtung der absorbierenden Struktur reflektiert wird.

5. Teleskop (10) nach Anspruch 3 oder 4, in welchem das geneigte Oberflächengebiet eine Form eines vorspringenden Kegels (11) oder einer Pyramide hat, mit einer Spitze (SC) des Kegels, die hin zu dem zweiten Loch (T2) orientiert ist, und wobei die absorbierende Struktur (12) den Kegel lateral umgibt.

6. Teleskop (10) nach einem der Ansprüche 2 bis 5, ferner aufweisend ein Rohr (13), das hinter dem Sekundärspiegel (M2) parallel zu der optischen Achse (A-A) und derart angeordnet ist, dass eine Eingangsöffnung (O13₁) des Rohrs gegenüber dem durch den Sekundärspiegel hindurchgehenden zweiten Loch (T2) angeordnet ist.

7. Teleskop (10) nach einem der Ansprüche 3 bis 5 in Kombination mit Anspruch 6, in welchem das geneigte Oberflächengebiet gegenüber einer Ausgangsöffnung (O13₂) des Rohrs (13) auf einer zum Sekundärspiegel (M2) entgegengesetzten Seite des Rohrs angeordnet ist, wobei eine Separationsdistanz zwischen dem geneigten Oberflächengebiet und dem Rohr derart ist, dass Lichtstrahlen (Tx0), die von der Fokalebene (PF) des Teleskops (10) herkommen und die zu der Oberflächenvariation des Sekundärspiegels (M2) gelangen und die dann durch Durchgang durch das Rohr auf dem geneigten Oberflächengebiet auftreffen, von dem geneigten Oberflächengebiet reflektiert werden und sich von der optischen Achse entfernen, indem sie zwischen dem geneigten Oberflächengebiet und dem Rohr hindurchgehen.

8. Teleskop (10) nach einem der vorstehenden Ansprüche, in welchem eine jeweilige Richtung, die normal zu jeder optischen Oberfläche der Linse ist, einen Winkel mit der optischen Achse (A-A) bildet, der zwischen 5° und 10° ist.

9. Teleskop (10) nach einem der vorstehenden Ansprüche, aufweisend ein dioptrisches System, das einen Kollimator (3) oder ein Abbildungsrelais bildet, wobei das dioptrische System mehrere Linse (L1-L4) aufweist, die auf dem Weg der Empfangslichtstrahlen (Rx), die das Bild in der Fokalebene (PF) erzeugen, angeordnet sind, wobei jede Linse zwei optische Oberflächen hat, die die optische Achse (A-A) des Teleskops schneiden, wobei eine jeweilige Richtung, die normal zu jeder der zwei optischen Oberflächen jeder Linse des dioptrischen Systems ist, einen Winkel mit der optischen Achse bildet, der an einem Schnittpunkt der optischen Linsenoberfläche mit der optischen Achse zwischen 5° und 10° ist.

10. Teleskop (10) nach einem der vorstehenden Ansprüche, ferner aufweisend mindestens ein Spektralfilter (9), das auf dem Weg der Empfangslichtstrahlen (Rx), die das Bild in der Fokalebene (PF) erzeugen, nach dem Sekundärspiegel (M2), gesehen in Ausbreitungsrichtung der Empfangslichtstrahlen, angeordnet ist, wobei das Filter zwei optische Oberflächen (S9₁, S9₂) hat, die die optische Achse (A-A) des Teleskops schneiden, wobei jede der zwei optischen Oberflächen des Filters einen Winkel mit der optischen Achse bildet, der an einem Schnittpunkt der optischen Oberfläche des Filters mit der optischen Achse verschieden von 90° ist.

11. Teleskop (10) nach Anspruch 10, in welchem die zwei optischen Oberflächen (S9₁, S9₂) des Filters (9) nicht zueinander parallel sind.

12. Teleskop (10) nach einem der vorstehenden Ansprüche, ferner aufweisend eine Feldmaske (8), die sich in einer Zwischenbildebene des Teleskops befindet, wobei die Feldmaske opak ist, mit Ausnahme einer Maskenöffnung (08), die dazu bestimmt ist, die Empfangslichtstrahlen (Rx), die das Bild in der Fokalebene (PF) erzeugen, hindurchtreten zu lassen.

13. Teleskop (10) nach einem der vorstehenden Ansprüche, wobei das Teleskop eines axialen Typs, insbesondere eines Cassegrain-Typs ist.

14. Optische Sende-Empfangsvorrichtung aufweisend ein Teleskop (10) nach einem der vorstehenden Ansprüche, und wobei die optische Vorrichtung ferner aufweist:
- mindestens einen Fotodetektor (20), der eingerichtet ist, um mindestens einen Teil der zur Fokalebene (PF) gelangenden Empfangslichtstrahlen (Rx) zu detektieren; und
- mindestens eine Quelle (30) für Emissionslichtstrahlen (Tx), die eingerichtet ist, um von mindestens einem Punkt (O) der Fokalebene (PF) aus die Emissionslichtstrahlen zu emittieren, so dass die Emissionslichtstrahlen durch das erste Loch hindurch den Primärspiegel (M1) passieren, von dem Sekundärspiegel (M2), dann von dem Primärspiegel (M1) reflektiert werden.

15. Vorrichtung nach Anspruch 14, die einen Teil eines Endgeräts für Kommunikation mittels Lasersignalen oder einen Teil eines LIDAR-Systems bildet.

## Claims

1. Telescope (10) comprising at least one primary mirror (M1) and a secondary mirror (M2), and adapted to form, when the telescope is used, an image in a focal plane (PF) with reception light rays (Rx) that are reflected by the primary mirror and then by the secondary mirror towards the focal plane, said secondary mirror being oriented perpendicularly to an optical axis (A-A) of said telescope,
the primary mirror (M1) being provided with a first hole (T1) at an intersection of the reflecting surface (S1) of said primary mirror with the optical axis (A-A), so that the reception light rays (Rx) that form the image in the focal plane (PF) pass through the first hole through the primary mirror after having been reflected by the secondary mirror (M2), and
the secondary mirror (M2) being provided with a surface alteration at an intersection of a reflecting surface (S2) of said secondary mirror with the optical axis (A-A), said surface alteration being adapted so that light rays (Tx0) that originate from the focal plane (PF) of the telescope (10) and which arrive at the surface alteration of the secondary mirror by passing through the first hole (T1) through the primary mirror (M1) are at least partly prevented from being reflected by said secondary mirror towards said focal plane,
the telescope (10) being **characterised in that** it further comprises at least one lens arranged on a path of the reception light rays (Rx) that form the image in the focal plane (PF), downstream of the secondary mirror (M2) in a direction of propagation of said reception light rays, said lens having two optical surfaces that intersect the optical axis (A-A) of the telescope, each of both optical surfaces of the lens forming with the optical axis an angle that is different from 90° at a point of intersection of said optical surface of the lens with the optical axis.

2. Telescope (10) according to claim 1, wherein the surface alteration of the secondary mirror (M2) is a second hole (T2) that connects the reflecting surface (S2) of said secondary mirror to a rear side of said secondary mirror.

3. Telescope (10) according to claim 2, furthermore comprising a surface portion that is inclined with respect to the optical axis (A-A), and which is arranged behind the secondary mirror (M2), so that at least part of the light rays (Tx0) that originate from the focal plane (PF) of the telescope (10) and arrive at the surface alteration of said secondary mirror are incident on the inclined surface portion after having passed through the secondary mirror through the second hole (T2).

4. Telescope (10) according to claim 3, furthermore comprising a structure (12) that is absorbing for radiation, arranged so that the part of the light rays (Tx0) that originate from the focal plane (PF) of the telescope (10) and arrive at the surface alteration of the secondary mirror (M2) is at least partially reflected by the inclined surface portion in direction of the absorbing structure.

5. Telescope (10) according to claim 3 or 4, wherein the inclined surface portion is in form of a projecting cone (11) or pyramid, with a vertex (SC) of said cone that is oriented towards the second hole (T2), and the absorbing structure (12) laterally surrounds the cone.

6. Telescope (10) according to any one of claims 2 to 5, furthermore comprising a tube (13) that is arranged behind the secondary mirror (M2), parallel to the optical axis (A-A), and so that an entry opening (O13₁) of the tube is facing the second hole (T2) through the secondary mirror.

7. Telescope (10) according to any one of claims 3 to 5 in combination with claim 6, wherein the inclined surface portion is facing an exit opening (O13₂) of the tube (13) on a side of said tube that is opposite the secondary mirror (M2), with a separation distance between said inclined surface portion and said tube such that light rays (Tx0) that originate from the focal plane (PF) of the telescope (10) and arrive at the surface alteration of the secondary mirror (M2), and are next incident onto the inclined surface portion while passing in the tube, are reflected by said inclined surface portion and move away from the optical axis while passing between the inclined surface portion and said tube.

8. Telescope (10) according to any one of the preceding claims, wherein a respective direction normal to each optical surface of the lens forms with the optical axis (A-A) an angle that is between 5° and 10°.

9. Telescope (10) according to any one of the preceding claims, comprising a dioptric system forming a collimator (3) or imaging relay, said dioptric system comprising a plurality of lenses (L1-L4) arranged on the path of the reception light rays (Rx) that form the images in the focal plane (PF), each lens having two optical surfaces that intersect the optical axis (A-A) of the telescope, a respective direction normal to each of both optical surfaces of each lens of the dioptric system forming with the optical axis an angle that is between 5° and 10° at a point of intersection of said lens optical surface with the optical axis.

10. Telescope (10) according to any one of the preceding claims, furthermore comprising at least one spectral filter (9) arranged on the path of the reception light rays (Rx) that form the image in the focal plane (PF), downstream of the secondary mirror (M2) in the direction of propagation of said reception light rays, said filter having two optical surfaces (S9₁, S9₂) that intersect the optical axis (A-A) of the telescope, each of both optical surfaces of the filter forming with the optical axis an angle that is different from 90° at a point of intersection between said optical surface of the filter and the optical axis.

11. Telescope (10) according to claim 10, wherein both optical surfaces (S9₁, S9₂) of the filter (9) are not parallel to each other.

12. Telescope (10) according to any one of the preceding claims, furthermore comprising a field stop (8) that is located in an intermediate image plane of the telescope, said field stop being opaque apart from a mask opening (08) intended to have passing therethrough the reception light rays (Rx) that form the image in the focal plane (PF).

13. Telescope (10) according to any one of the preceding claims, said telescope being of axial type, in particular of a Cassegrain type.

14. Optical emission/reception apparatus comprising a telescope (10), said telescope being in accordance with any one of the preceding claims, and the optical apparatus further comprising:
- at least one photodetector (20) that is arranged to detect at least part of the reception light rays (Rx) as arriving at the focal plane (PF); and
- at least one source (30) of emission light rays (Tx) that is arranged to emit the emission light rays from at least one point (O) of the focal plane (PF), so that said emission light rays pass through the primary mirror (M1) through the first hole, are reflected by the secondary mirror (M2) and then by said primary mirror (M1).

15. Apparatus according to claim 14, forming a part of a laser-signal communication terminal or a part of a Lidar system.
